# EUROPÄISCHE PATENTSCHRIFT

(11) **EP 2 410 638 B1**
(45) Veröffentlichungstag und Bekanntmachung des Hinweises auf die Patenterteilung: **24.04.2013**
(21) Anmeldenummer: 10170549.9
(22) Anmeldetag: 23.07.2010
(51) Int. Cl.: H02K 5/173, H02K 7/00

(54) **Kfz-Aggregat-Elektromotor**
Electric motor for auxiliary unit in a motor vehicle
Moteur électrique pour un agrégat auxiliaire d`un véhicule automobile

(43) Veröffentlichungstag der Anmeldung: 25.01.2012
(73) Patentinhaber: Pierburg Pump Technology GmbH, 41460 Neuss (DE)
(72) Erfinder: Lindner, Enrico, 09322 Penig (DE); Zill, Mathias, 09629 Neukirchen (DE); Rathke, Ronald, 04720 Döbeln (DE)
(74) Vertreter: ter Smitten, Hans

(56) Entgegenhaltungen:
- WO-A1-2007/065749
- DE-A1- 3 810 299
- DE-U1-202009 011 583

## Beschreibung

Die Erfindung bezieht sich auf einen Kfz-Aggregat-Elektromotor, der ein Aggregat in einem Kraftfahrzeug mit Verbrennungsmotor antreibt. Das Aggregat kann beispielsweise ein Sekundarfuftgebiase sein.

Kfz-Aggregat-Elektromotoren sind insbesondere in Kraftfahrzeugen mit Verbrennungsmotor mitunter dauerhaft hohen mechanischen und thermischen Betastungen ausgesetzt. Dies gift insbesondere für Aggregate, die mit Abgas mechanisch und/oder thermisch in Kontakt stehen, wie dies beispielsweise für ein durch einen Elektromotor angetriebenes Sekundärluftgebläse der Fall ist.

Ein typischer Kfz-Aggregat-Elektromotor weist eine Metall-Motorwelle auf, die durch zwei Wälzlager drehbar gelagert ist, nämlich durch ein Axial/Radial-Wälzlager, das so genannte Festlager, und durch ein Radial-Wälzlager, das so genannte Loslager. Ein Loslager ist erforderlich, um innere axiale Spannungen zu vermeiden. Das Radial-Wälzlager weist einen Innenring aus Metall auf, der mit Spielpassung auf der Motorwelle sitzt, so dass der Innenring, und damit das gesamte Radial-Wälzlager, axial gegen einen gewissen Widerstand verschiebbar ist. Die Verschiebungen ergeben sich beispielsweise aus Vibrationen und aus verschiedenen temperaturbedingten Längenänderungen verschiedener Bauteile des Elektromotors. Durch die ständigen Verschiebungen verschlechtern sich die aufeinander reibenden Oberflächen der Motorwelle und des Wälzlager-Innenrings, was zu so genanntem Passungsrost führt. Zur Vermeidung von Passungsrost wird die Motorwelle beziehungsweise der Wälzlager-Innenring vor der Montage gefettet. Hierdurch kann jedoch Passungsrost bei hoher Beanspruchung auf Dauer nicht vermieden werden.

Aus WO 2007/065749 A1 ist ein Kfz-Aggregat-Elektromotor mit einem Radial-Wälzlager bekannt, wobei die Motorwelle im Bereich des Wälzlager-Innenrings zwei Ringnuten aufweist, die der Aufnahme von Federn dienen.

Aufgabe der Erfindung ist es demgegenüber, eine Kfz-Aggregat-Elektromotor mit verringertem Passungsrost im Bereich des Radial-Wälzlagers zu schaffen.

Diese Aufgabe wird erfindungsgemäß gelöst mit den Merkmalen des Patentanspruches 1.

Gemäß der Erfindung weist die Motorwelle im Bereich des Radial-Wälzlager-Innenrings mindestens eine ringförmige Schmiermittel-Ringnut auf, deren Öffnungsseite durch den Innenring verschlossen ist. Die Ringnut ist mit einem korrosionshemmenden Schmiermittel gefüllt. Im Bereich der Passung ist in der Ringnut also ein Schmiermittel-Depot angelegt, das ausreichend ist, über die gesamte typische Lebenszeit des betreffenden Verbrennungsmotors beziehungsweise Kraftfahrzeugs Passungsrost zuverlässig zu vermeiden.

Die Ringnut verläuft streng ringförmig, also nicht in einer Schraubenlinie. Hierdurch wird sichergestellt, dass das Schmiermittel in der Ringnut axial nicht wandern kann. Bei Rotation der Motorwelle wird durch die Zentrifugalkräfte das Schmiermittel aus der Ringnut radial auf die zylindrische Innenfläche des Wälzlager-Innenrings geschleudert. Auf diese Weise ist sichergestellt, dass im Bereich der Passung stets ein dünner Schmiermittel-Film erhalten bleibt. Vorzugsweise beträgt das Spiel der Spielpassung weniger als 10 µm.

Vorzugsweise sind in dem Bereich des Innenringes beziehungsweise der Passung mehrere parallele Ringnuten vorgesehen, die alle durch den Wälzlager-Innenring verschlossen sind. Je größer die axiale Länge des Wälzlager-Innen rings ist, desto mehr Ringnuten sind sinnvoll, um die gesamte axiale Länge der Passung zuverlässig und dauerhaft mit Schmiermittel zu versorgen. Besonders bevorzugt sind mindestens drei parallele Ringnuten vorgesehen.

Gemäß einer bevorzugten Ausgestaltung beträgt die Summe der axialen Länge aller Öffnungen aller Schmiermittel-Ringnuten zusammen mindestens 1/3 der axialen Länge des Innenring. Mit anderen Worten, mindestens 1/3 der axialen Länge des Innenrings wird in Form von Ringnuten für das Verhalten eines Schmiermittel-Depots genutzt.

Vorzugsweise ist die Schmiermittel-Ringnut im Querschnitt im Wesentlichen rund, und besonders bevorzugt kreisrund ausgebildet. Durch eine runde Ringnut, bei der insbesondere der Nutboden ausgerundet ist, wird sichergestellt, dass auch das Schmiermittel am Nutboden leicht nach radial außen wandern kann. Vorzugsweise ist die axiale Länge der Ringnut-Öffnung mindestens doppelt so groß wie die radiale Tiefe der Ringnut.

Gemäß einer bevorzugten Ausgestaltung ist mindestens 30 %, bevorzugt mindestens 50 % des Volumens beziehungsweise der Querschnittsfläche der Schmiermittel-Ringnut mit dem korrosionshemmenden Schmiermittel gefüllt. Dies wird durch entsprechende optische Kontrollen bei der Herstellung des Elektromotors sichergestellt, durch die der Schmiermittel-Füllungsgrad der Ringnuten überprüft wird.

Im Folgenden wird ein Ausführungsbeispiel der Erfindung anhand der Zeichnungen näher erläutert.

Es zeigen:
- Figur 1: einen Längsschnitt eines Kfz-Aggregat-Elektromotors mit einem Axial/Radial-Wälzlager und einem Radial-Wälzlager,
- Figur 2: eine vergrößerte Darstellung des Radial-Wälzlagers des Elektromotors der Figur 1, und

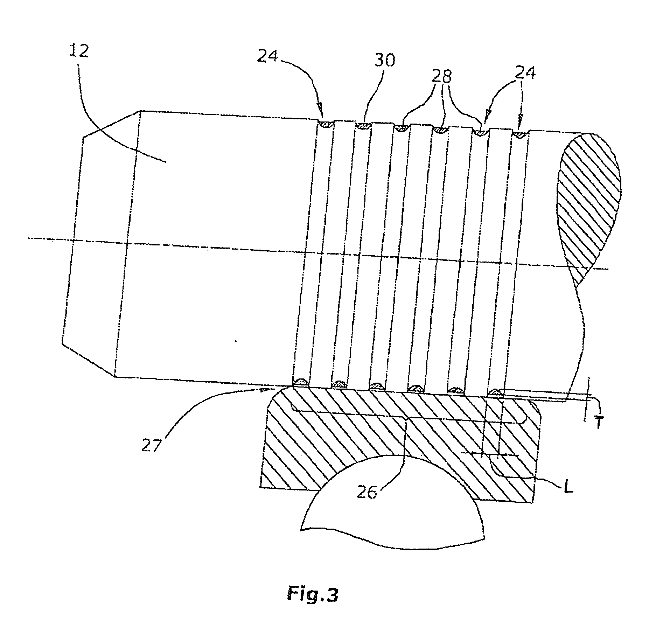

- Figur 3: eine vergrößerte Darstellung der Motorwelle im Bereich des Radial-Wälzlagers.

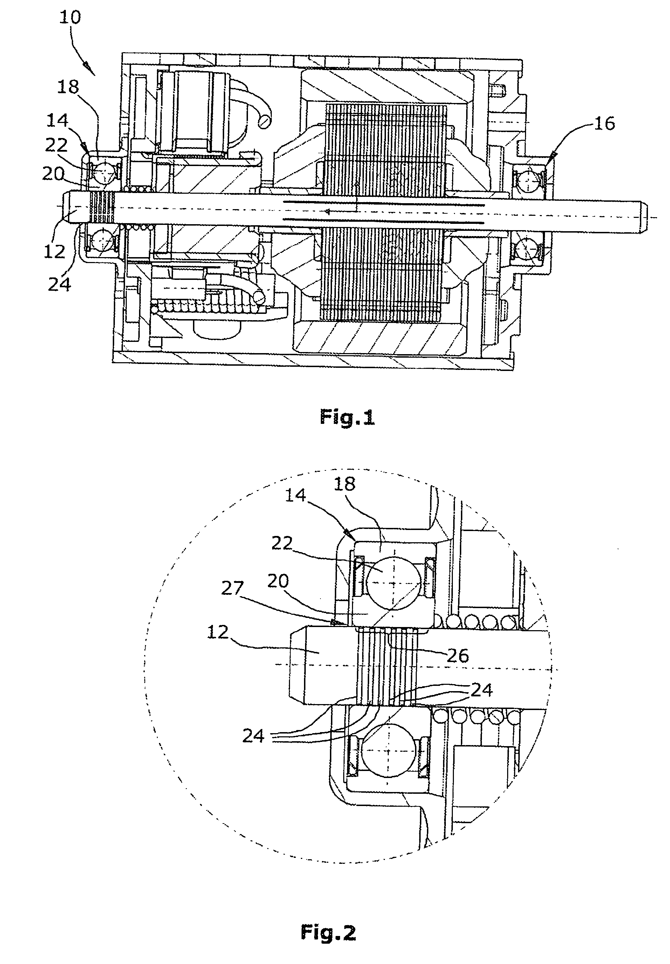

In der Figur 1 ist ein Kfz-Aggregat-Elektromotor 10 dargestellt, der beispielsweise zum Antrieb eines Sekundärluftgebläses verwendet wird. Der Elektromotor 10 weist eine Motorwelle 12 aus Metall auf, die durch ein Axial/Radial-Wälzlager 16 und durch ein Radial-Wälzlager 14 gelagert ist.

Das Radial-Wälzlager 14 besteht aus einem Außenring 18, einen Innenring 20 aus Metall und mehreren Wälzkörpern 22. Der Innenring 20 sitzt in einem Spielpassungs-Bereich 26 mit Spielpassung auf der Motorwelle 12, das heißt mit einem Ringspalt 27 beziehungsweise einem Spiel von weniger als 10 µm.

In dem axialen Spielpassungs-Bereich 26 weist die Motorwelle 12 sechs Schmiermittel-Ringnuten 24 auf, die jeweils mindestens zur Hälfte mit einem korrosionshemmenden Schmiermittel 28 über den gesamten Umfang gefüllt sind. Der Innenring 20 verschließt die Öffnungen der Ringnuten 24. Das Schmiermittel 28 sorgt für die gesamte Lebenszeit des Elektromotors 10 dafür, dass der gesamte Spielpassungs-Bereich 26, das heißt, der gesamte Spielpassungs-Ringsspait 27 stets mit einem dünnen Film des Schmiermittels geschmiert ist. Hierdurch wird zum einen der mechanische Verschleiß der beteiligten Oberflächen verringert und zum anderen Korrosion unmittelbar verhindert.

Die Schmiermittel-Ringnuten 24 sind im Querschnitt im Wesentlichen rund ausgebildet, das heißt, insbesondere der Ringnut-Boden 30 ist rund und nicht rechteckig ausgeformt. Die axiale Läge L der Öffnungen aller Ringnuten 24 zusammen beträgt mindestens 1/3 der Länge des Spieipassungs-Bereichs 26, also des Bereichs, in dem der Wälzlager-Innenring 20 mit Spielpassung auf der Motorwelle 12 sitzt. Die axiale Länge L der Öffnung der Schmiermittel-Ringnut 24 ist mehr als doppelt so groß wie ihre radiale Tiefe T.

## Patentansprüche

1. Kfz-Aggregat-Elektromotor (10) mit einem Radial-Wälzlager (14), das einen Außenring (18) und einen Metall-Innenring (20) aufweist, wobei der Innenring (20) auf einer Metall-Motorwelle (12) mit Spielpassung befestigt ist,
wobei
die Motorwelle (12) im Bereich (26) des Innenrings (20) mindestens eine ringförmige Ringnut (24) aufweist, die durch den Innenring (20) verschlossen ist, **dadurch gekennzeichnet, dass**
die Ringnut (24) eine Schmiermittel-Ringnut ist, die mit einem korrosionshemmenden Schmiermittel (28) gefüllt ist.

2. Kfz-Aggregat-Elektromotor (10) nach Ansprunch 1, wobei das Spiel der Spielpassung weniger als 10 µm beträgt.

3. Kfz-Aggregat-Elektromotor (10) nach einem der vorangegangenen Ansprüche, wobei die Schmiermittel-Ringnut (24) im Querschnitt im wesentlichen rund, und besonders bevorzugt kreisrund ausgebildet ist.

4. Kfz-Aggregat-Elektromotor (10) nach einem der vorangegangenen Ansprüche, wobei die axiale Länge L der Öffnung der Schmiermittel-Ringnut (24) mindestens doppelt so groß ist wie die radiale Tiefe T der Ringnut (24).

5. Kfz-Aggregat-Elektromotor (10) nach einem der vorangegangenen Ansprüche, wobei mindestens 30 %, bevorzugt mindestens 50 % des Volumens der Schmiermittel-Ringnut (24) mit dem korrosionshemmenden Schmiermittel (28) gefüllt ist.

6. Kfz-Aggregat-Elektromotor (10) nach einem der vorangegangenen Ansprüche, wobei mehrere parallele Schmiermittel-Ringnuten (24) vorgesehen sind, die alle durch den Innenring (20) verschlossen sind.

7. Kfz-Aggregat-Elektromotor (10) nach Anspruch 6 wobei mindestens drei Schmiermittel-Ringnuten (24) vorgesehen sind.

8. Kfz-Aggregat-Elektromotor (10) nach Anspruch 6 oder Anspruch 7 wobei die Summe der axialen Länge L der Öffnungen aller Schmiermittel-Ringnuten (24) mindestens 1/3 der axialen Länge des Spielpassungs-Bereichs (26) beträgt.

## Claims

1. Electric motor (10) for an auxiliary unit in a motor vehicle, comprising a radial roller bearing (14) with an outer race (18) and a metal inner race (20), the inner race (20) being mounted on a metal motor shaft (12) with a clearance fit,
wherein the motor shaft (12) comprises at least one annular ring groove (24) in the region (26) of the inner race (20), said groove being closed by the inner race (20),
**characterized in that**
the ring groove (24) is a lubricant ring groove is filled with an anticorrosive lubricant (28).

2. Electric motor (10) for an auxiliary unit in a motor vehicle as defined in claim 1, wherein the clearance of the clearance fit is less than 10 µm.

3. Electric motor (10) for an auxiliary unit in a motor vehicle as defined in one of the preceding claims, wherein the cross section of the lubricant groove (24) is substantially of a round shape, and particularly preferred of a circular shape.

4. Electric motor (10) for an auxiliary unit in a motor vehicle as defined in one of the preceding claims, wherein the axial length L of the opening of the lubricant ring groove (24) is at least twice the radial depth T of the ring groove (24).

5. Electric motor (10) for an auxiliary unit in a motor vehicle as defined in one of the preceding claims, wherein at least 30%, preferably at least 50% of the volume of the lubricant ring groove (24) is filled with the anticorrosive lubricant (28).

6. Electric motor (10) for an auxiliary unit in a motor vehicle as defined in one of the preceding claims, wherein a plurality of parallel lubricant ring grooves (24) are provided that are all closed by the inner race (20).

7. Electric motor (10) for an auxiliary unit in a motor vehicle as defined in claim 6, wherein at least three lubricant ring grooves (24) are provided.

8. Electric motor (10) for an auxiliary unit in a motor vehicle as defined in claim 6 or claim 7, wherein the sum of the axial lengths L of the openings of all lubricant ring grooves (24) is at least 1/3 of the axial length of the clearance fit region (26).

## Revendications

1. Moteur électrique (10) pour un agrégat auxiliaire d'un véhicule automobile, comprenant un palier à rouleau radial (14) avec une bague extérieure (18) et une bague intérieure métallique (20), ladite bague intérieure (20) étant montée sur un arbre de moteur (12) métallique avec un ajustement avec jeu,
ledit arbre de moteur (12) comprenant au moins une rainure annulaire (24) en forme d'anneau dans la région (26) de la bague intérieure (20), ladite rainure étant fermée par ladite bague intérieure (20),
**caractérisé en ce que**
ladite rainure annulaire (24) est une rainure annulaire à lubrifiant, qui est remplie d'un lubrifiant anticorrosif (28).

2. Moteur électrique (10) pour un agrégat auxiliaire d'un véhicule automobile, selon la revendication 1, dans lequel le jeu de l'ajustement avec jeu est inférieur à 10 µm.

3. Moteur électrique (10) pour un agrégat auxiliaire d'un véhicule automobile, selon l'une quelconque des revendications précédentes, dans lequel ladite rainure annulaire à lubrifiant (24) a une section transversale en forme ronde, et particulièrement préféré en forme circulaire.

4. Moteur électrique (10) pour un agrégat auxiliaire d'un véhicule automobile, selon l'une quelconque des revendications précédentes, dans lequel la longueur axiale L de l'ouverture de ladite rainure annulaire à lubrifiant (24) est au moins deux fois la profondeur radiale T de ladite rainure annulaire à lubrifiant (24).

5. Moteur électrique (10) pour un agrégat auxiliaire d'un véhicule automobile, selon l'une quelconque des revendications précédentes, dans lequel au moins 30%, de préférence au moins 50% du volume de ladite rainure annulaire à lubrifiant (24) est remplie avec le lubrifiant (28) anticorrosif.

6. Moteur électrique (10) pour un agrégat auxiliaire d'un véhicule automobile, selon l'une quelconque des revendications précédentes, dans lequel plusieurs rainures annulaires à lubrifiant (24) sont prévues qui sont tous fermées par ladite bague intérieure (20).

7. Moteur électrique (10) pour un agrégat auxiliaire d'un véhicule automobile, selon la revendication 6, dans lequel au moins trois rainures annulaires à lubrifiant (24) sont prévues.

8. Moteur électrique (10) pour un agrégat auxiliaire d'un véhicule automobile, selon la revendication 6 ou la revendication 7, dans lequel la somme des longueurs axiales L des ouvertures de toutes les rainures annulaires à lubrifiant (24) est égale à au moins 1/3 de la longueur axiale de la région d'ajustement avec jeu (26).
